# EUROPÄISCHE PATENTANMELDUNG

(11) **EP 1 137 296 A1**
(43) Veröffentlichungstag der Anmeldung: **26.09.2001**
(21) Anmeldenummer: 00106112.6
(22) Anmeldetag: 21.03.2000
(51) Int. Cl.: H04Q 7/30, H04Q 7/24

(54) **Verfahren und Vorrichtungen für ein zellulares Kommunikationsnetz**

(71) Anmelder: TELEFONAKTIEBOLAGET LM ERICSSON (publ), 126 25 Stockholm (SE)
(72) Erfinder: Hameleers, Heino, 6471 VN Kerkrade (NL); Hundscheidt, Frank, 6483 BK Kerkrade (NL)
(74) Vertreter: Mohsler, Gabriele

(57) **Zusammenfassung**

Die Erfindung betrifft Vorrichtungen und Verfahren zur Auswahl von Netzknoten in einem zellularen Kommunikationsnetz. Durch den Wegfall von festen Verbindungen zwischen Netzknoten verschiedener Hierarchieebenen muß beispielsweise ein Netzknoten eines Zugangsnetzes eine Auswahl unter verschiedenen Kernnetzknoten treffen. Der ausgewählte Kernetzknoten benötigt Versorgungsinformationen über den Zugangsnetzknoten und das von dem Zugangsnetzknoten versorgte Gebiet.
Die Erfindung beschreibt Vorrichtungen zur Auswahl von Netzknoten und zur Bereitstellung von Versorgungsinformationen. Die Vorrichtungen können zentral oder verteilt im Netz implementiert werden. Darüber hinaus beschreibt die Erfindung Netzknoten, die mit diesen Vorrichtungen zusammenarbeiten sowie Verfahren zur Umsetzung der Erfindung.

## Beschreibung

Die Erfindung betrifft Vorrichtungen und Verfahren zur Auswahl von Netzknoten für ein zellulares Kommunikationsnetz.

Bei zellularen Kommunikationsnetzen der sogenannten "dritten Generation", werden neue Architekturen ermöglicht. Diese Architekturen sollen vereinfachte Netzanpassungen an wechselnde Anforderung erlauben. Ein wichtiger Aspekt der neuen Architekturen ist, daß bisher feste hierarchische Zusammenhänge zwischen den Netzknoten durch dynamische hierarchische Zusammenhänge ersetzt werden. Feste Verbindungen bestehen in GSM (Global System for Mobile communication) Netzen beispielsweise zwischen Basisstationssteuereinrichtungen (base station controller) und Funkbasisstationen (radio base station) oder Basisstationssubsystemen (base station subsystem) und Mobilfunkvermittlungsstellen (mobile services switching centre). Hier arbeitet jede Mobilfunkvermittlungsstelle mit vordefinierten Basisstationssubsystemen zusammen.
Kommunikationsnetze lassen sich in Kernnetze und Zugangsnetze sowie Dienstenetze unterteilen.
Der Wechsel zu dynamischen Verbindungen hat Auswirkungen auf die Zusammenarbeit sowohl innerhalb von Kernnetzen und Zugangsnetzen als auch zwischen diesen.
Ein Kernnetz besteht aus mindestens einem Netzknoten, der einen Telekommunikationsdienst oder Verwaltungsdienst anbietet, einem sogenannten Kernnetzdiensteknoten. Die Aufgaben eines Kernnetzes sind zum Beispiel die Vermittlung von Verbindungen, die Mobilitätsverwaltung, die Gebührendatenerfassung sowie die Speicherung und Verwaltung von Teilnehmerdaten. Knoten eines Kernnetzes sind beispielsweise Mobilfunkvermittlungsstellen (mobile services switching centre), GPRS Unterstützungsknoten (General Packet Radio Service support nodes), Heimatdateien (home location register) und Dienstesteuerungsknoten (service control node).

Ein Zugangsnetz ist ein Netz, daß mindestens einem Teilnehmer Zugang zu einem Kernnetz ermöglicht. Übliche Aufgaben eines Zugangsnetzes sind die Verwaltung von Zugangsresourcen wie Funkkanälen, Messung von Verbindungsgüten und Zusammenarbeit mit einem Kernnetz. Knoten eines Zugangsnetzes sind beispielsweise Basisstationssteuerungseinrichtungen (base station controller), Funkbasisstationen (radio base station) und Funknetzsteuerungseinrichtungen (radio network controller).
Dienstenetze, die Netzknoten zur Unterstützung von Diensten, die über die Vermittlung von Verbindungen hinausgehen, enthalten, werden in dieser Anmeldung als Teil eines Kernnetzes betrachtet, Knoten dieser Netze werden als Kernnetzdiensteknoten betrachtet.
Exemplarisch ist die Zusammenarbeit zwischen Kernnetzknoten und Zugangsnetzknoten in Netzen die nach einer neuen Architektur aufgebaut sind, beispielsweise sogenannte "dritte Generation Netze". Die Zusammenarbeit zwischen diesen Knoten wird flexibler gehandhabt. So kann nicht mehr nur ein Kernnetzknoten mit einer Vielzahl von Zugangsnetzknoten zusammenarbeiten, eine sogenannte 1 zu N Relation. Vielmehr kann jetzt eine Mehrzahl von Zugangsnetzknoten mit einer Mehrzahl von Kernnetzknoten in einer sogenannten N zu M Relation zusammenarbeiten. Der technische Bericht des third generation partnership projects 3G TR 23.922 version 1.0.0 veröffentlicht Oktober 1999 beschreibt die Einführung von zellularen Kommunikationsnetzen, bei denen die Verbindungen zwischen Netzknoten auf dem Internet Protokoll basieren. Das Internet Protokoll realisiert die dynamischen Verbindungen zwischen den Netzknoten. Eine Presseveröffentlichung der Firma Ericsson vom 1 Februar 2000 beschreibt die verbesserte Flexibitität dieser Architektur. Die Architektur ermöglicht es, flexibler auf Anforderungen, wie beispielsweise kurzzeitig inhomogene Lastverteilungen, zu reagieren.

Es ist Stand der Technik, daß durch die festen Verbindungen zwischen den Netzknoten, jedem Netzknoten innerhalb eines Kommunikationsnetzes bestimmte Netzknoten zur Zusammenarbeit zugeordnet sind. Damit stellt sich beispielsweise beim Aufbau von Verbindungen, bei Standortaktualisierungen (location update) oder bei Anrufübergaben (handover) nicht das Problem eine Auswahl aus einer Mehrzahl von Netzknoten treffen zu müssen. Dieses Problem entsteht erst durch die dynamische Zuordnung von Netzknoten zueinander. Eine weitere Schwierigkeit ist die Bereitstellung von Versorgungsinformationen. Nach dem Stand der Technik sind diese Informationen in den jeweiligen Netzknoten, in denen sie benötigt werden gespeichert. Diese Lösung beizubehalten bedeutet, bei dynamischer Zuordnung, daß jeder Netzknoten die Versorgungsinformationen aller Netzknoten, mit denen er zusammenarbeiten kann, speichern muß.

Versorgungsinformationen eines Netzknotens umfassen Daten über den Dienstebereich (service area) und den Versorgungsbereich (routeing area), der von dem Netzknoten versorgt wird, sowie Informationen über den Knoten an sich. Dies sind beispielsweise die Notrufzentrale, die bei einem Notruf in dem Versorgungsgebiet vermittelt wird, Abrechnungsursprung und Anrufursprung, beides geographische Angaben über einen Anrufer, wobei die erste Angabe in der Rechnungserstellung und die zweite Angabe für die Anrufbearbeitung benötigt wird, und lokale Anrufbeschränkungen, falls einTeilnehmer nur in einem bestimmten Gebiet telefonieren darf. Der Standard GSM 03.08 version 7.2.0 zur die Handhabung von Teilnehmerdaten, veröffentlicht 1998, beschreibt Standortinformationen und lokale Anrufbeschränkungen.

Die vielfache Speicherung von Versorgungsinformationen sämtlicher Netzknoten hat die Nachteile, daß unnötig große Datenmengen gespeichert werden und daß diese Informationen mit hohem Aufwand konsistent gehalten werden müssen.

Demgemäß ist es Aufgabe der Erfindung, Verfahren und Einrichtungen für eine verbesserte Zusammenarbeit zwischen Netzknoten in einem zellularen Kommunikationsnetz zur Verfügung zu stellen. Es ist weiterhin Aufgabe der Erfindung Verfahren zu entwickeln, um Netzknoten auf einfachere Art und Weise Versorgungsinformationen über weitere Netzknoten, gegebenenfalls auch über Dienstebereiche oder Versorgungsbereiche, zur Verfügung zu stellen.

Dies wird erfindungsgemäß gelöst durch die Lehre der Ansprüche 1, 7, 9,10, 13 und 16.

Vorteilhaft ist, daß verfügbare Bearbeitungskapazitäten optimal ausgenutzt werden können. Eine gleichmäßigere Auslastung von Netzknoten wird erreicht.

Besonders vorteilhaft ist, daß Netzknoten selbständig interne Zustände überprüfen und, falls erforderlich, eigenständig Nachrichten zur Aktualisierung der entsprechende Einträge in Auswahlvorrichtungen und Konfigurationsdatenbanken senden. Dies erleichtert die Registrierung neuer Knoten und erlaubt eine hohe Aktualität der Daten mit geringem administrativen Aufwand.

Weiterhin vorteilhaft ist, daß die gut bekannte Datenbanktechnologie verwendet wird. Dies vermindert Entwicklungskosten und vermeidet Ausfallzeiten durch Entwicklungsfehler.

Ebenso vorteilhaft ist die Verwendung einer Konfigurationsdatenbank. Diese ermöglicht die Bereitstellung von Versorgungsinformationen mit hoher Datenkonsistenz bei geringem Administrationsaufwand.

Besonders vorteilhaft ist die selbsttätige Aktualisierung der Daten in einer Auswahlvorrichtung durch Netzknoten. Dies ermöglicht die selbsttätige Integration neuer Netzknoten, oder von Netzknoten die zwischenzeitlich defekt waren, in einem Kommunikationsnetz.

Weitere vorteilhafte Ausgestaltungen sind den Ansprüchen 2 bis 6, 8, 11, 12, 14 und 15 zu entnehmen.

Vorteilhaft erweist sich die Speicherung freier Kapazitäten gemäß Anspruch 2. Dies ermöglicht eine gezielte Auswahl von Netzknoten.

Weiter vorteilhaft erweist sich, wenn gemäß Anspruch 3 nur Daten von Netzknoten mit freien Kapazitäten gespeichert werden. Dies vermindert die Anzahl von Datensätzen, die in einer Auswahlvorrichtung verwaltet und durchsucht werden müssen.

Besonders vorteilhaft ist die Berücksichtigung von Distanzen zwischen Netzknoten gemäß Anspruch 4. Dies vermeidet unnötig weite Verbindungen innerhalb eines Netzes und spart damit Netzkapazitäten ein.

Weiter vorteilhaft ist die Speicherung bevorzugter Zuordnungen von Netzknoten in einer Auswahlvorrichtung gemäß Anspruch 5. Dies vermeidet eine unnötige Zugriffe auf den Knotenkapazitätsspeicher und gegebenenfalls Berechnungen von Distanzen.

Auch vorteilhaft ist ein Versorgungsinformationsspeicher gemäß Anspruch 6. Er ermöglicht die Bereitstellung von Versorgungsinformationen für Netzknoten auf einfache Art und Weise.

Weiter vorteilhaft ist die Speicherung von Versorgungsinformationen in einem Netzknoten gemäß Anspruch 8. Sie vermeidet unnötige Übermittlungen von Versorgungsinformationen sowie Versorgungsinformationsanforderungen und vermindert somit den Datenverkehr durch das Netz.

Ebenfalls vorteilhaft ist die Zusendung von Versorgungsinformationen gemäß Anspruch 11, zum Beispiel durch eineAuswahlvorrichtung. Das vermindert den Signalisierungsaufwand, da keine Abfrage der Daten erfolgen muß, und stellt die rechtzeitige Verfügbarkeit der Informationen sicher.

Weiter vorteilhaft ist die automatische Zusendung von Versorgungsinformationen durch eine Konfigurationsdatenbank gemäß Anspruch 12. Das verbindet den Vorteil der rechtzeitigen Verfügbarkeit der Versorgungsinformationen mit dem Vorteil des geringen Administrationsaufwands für eine zentrale Einrichtung.

Besonders vorteilhaft gemäß Anspruch 14 ist die Kontaktierung eines bevorzugten Netzknotens vor dem Senden einer Netzknotenanforderung. Das vermindert die Anzahl von zu bearbeitenen Netzknotenanforderungen.

Besonders vorteilhaft gemäß Anspruch 15 ist die Speicherung einer Liste bevorzugter Netzknoten in einem Netzknoten. Das vermindert die Anzahl von Netzknotenanforderungen und vermindert somit den Datenverkehr durch das Netz.

Im folgenden wird die Erfindung anhand der Figuren und anhand von Ausführungsbeispielen erläutert. Folgende Figuren zeigen:
Fig. 1 eine erfindungsgemäße Auswahlvorrichtung,
Fig. 2 eine weitere erfindungsgemäße Auswahlvorrichtung,
Fig. 3 einen erfindungsgemäßen Netzknoten,
Fig. 4 ein erfindungsgemäßes Kommunikationsnetz,
Fig. 5 eine erfindungsgemäße Konfigurationsdatenbank,
Fig. 6 eine erfindungsgemäße Auswahl eines Netzknotens bei einer Erstanmeldung eines Endgerätes und
Fig. 7 eine erfindungsgemäße Auswahl eines Netzknotens bei einer Standortaktualisierungsanforderung.

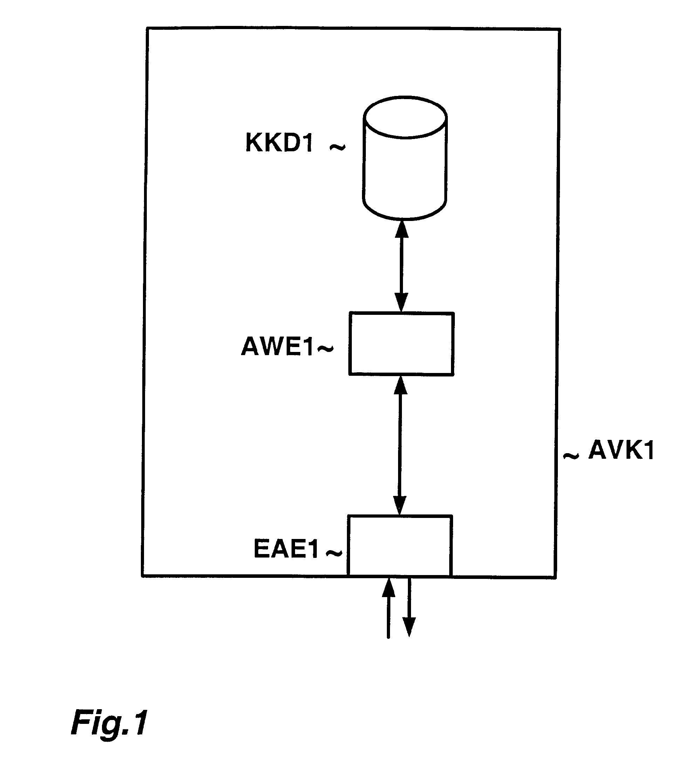

Im folgenden wird eine Ausgestaltung der Erfindung anhand von Figur 1 erläutert. Die erfindungsgemäße Auswahlvorrichtung AVK1 umfaßt einen Knotenkapazitätsspeicher KKD1, eine Bearbeitungseinheit AWE1 und eine Ein/Ausgabeeinheit EAE1. In dem Knotenkapazitätsspeicher KKD1 werden Parameter von Netzknoten gespeichert. Diese Informationen können sich auf eine Identifikation von Netzknoten und deren freie Kapazitäten beziehungsweise auf die bloße Identifikation von Netzknoten mit freien Kapazitäten beschränken.

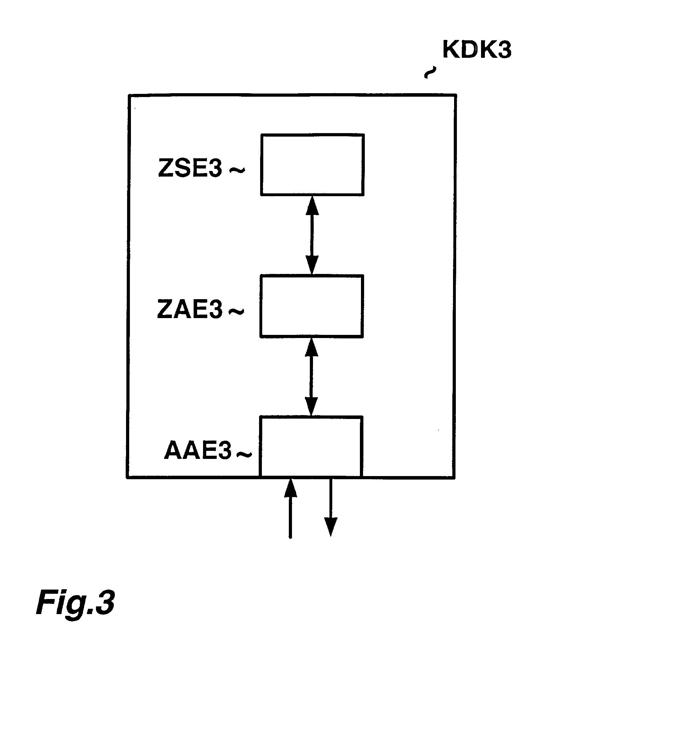

Eine Aktualisierung des Knotenkapazitätsspeichers KKD1 kann auf verschiedene Weise realisiert werden. Sie geschieht beispielsweise durch Netzknoten, die interne Zustände überprüfen und mit vorgegebenen Schwellwerten vergleichen wie für Figur 3 beschrieben. Ein anderer Weg ist, daß in der Auswahlvorrichtung AVK1 ein Zähler für jeden Netzknoten gespeichert wird, der nach Zuweisung des Netzknotens zu einer Netzknotenanforderung inkrementiert wird. Dies macht eine Rückmeldung erforderlich, wenn Kapazitäten des Netzknotens wieder freigegeben werden, damit der Zähler entsprechend dekrementiert wird.

Eine Netzknotenanforderung enthält zumindest implizit Angaben, die einen oder mehrere Parameter eines angeforderten Netzknotens spezifizieren. So identifiziert sich der Absender einer solchen Anforderung, beispielsweise durch eine Absenderadresse oder durch eine logische Verbindung über die er die Anforderung sendet. Anhand dieser Identifikation ist eine Bestimmung des Standortes des Anforderers möglich. Ein Anforderer wird in aller Regel ein weiterer Netzknoten oder ein Nutzerendgerät sein. Weitere Anforderer können beispielsweise Dienste oder sogenannte Agenten sein.

Darüber hinaus können aus der Kenntnis des Anforderers und gegebenenfalls der Art der Anforderung weitere Informationen gewonnen werden, die dann mit den gespeicherten Parametern verglichen werden. Diese Informationen können beispielsweise sein, gewünschter Kernnetzdienst wie Vermittlung, Mobilitätsverwaltung, Gebührenverwaltung oder Positionierungsdienst, gewünschter Telekommunikationsdienst wie Telefonie, Faksimile oder Datenübertragung, gewünschte Vermittlungsart wie paket- oder leitungsvermittelt, Unterstützung eines bestimmten Standards erforderlich wie GSM, GPRS oder UMTS, ein Netzknoten eines bestimmten Herstellers wird verlangt oder bevorzugt, ein bestimmtes, beispielsweise proprietäres, Protokoll muß unterstützt werden, eine bestimmte Version einer Software oder Hardware wird bevorzugt oder ist erforderlich. Diese Informationen oder Teile davon können als Parameter in dem Knotenkapazitätsspeicher KKD1 der Auswahlvorrichtung AVK1 gespeichert sein.

Die Bearbeitungseinheit AWE1 wählt, nach Erhalt einer Netzknotenanforderung von der Ein/Ausgabeeinheit, einen Netzknoten aus und weist ihn der Netzknotenanforderung zu. Wenn in dem Knotenkapazitätsspeicher KKD1 Angaben, die über eine bloße Identifikation eines Netzknotens hinausgehen, gespeichert sind, erfolgt die Auswahl unter Verwendung solcher Angaben.
Die Bearbeitungseinheit AWE1 analysiert eine Netzknotenanforderung auf Informationen, die aus der Anforderung gewonnen werden können, und vergleicht sie mit den Parametern, die in dem Knotenkapazitätsspeicher KKD1 gespeichert sind. Anhand dieses Vergleiches wählt sie entweder einen Netzknoten aus und teilt die Auswahl über die Ein/Ausgabeeinheit EAE1 dem Anforderer mit, oder sie teilt mit, daß kein Netzknoten mit den gewünschten Anforderungen verfügbar ist. Im Anschluß an eine Mitteilung, daß kein Netzknoten den Anforderungen entspricht, kann eine Verhandlungssequenz zwischen der Auswahlvorrichtung und einem Anforderer gestartet werden, in der der Anforderer seine Anforderungen überprüft und an Möglickeiten die die Auswahlvorrichtung anbietet anpaßt.

Sind mehrere Netzknoten verfügbar, die die gewünschten Anforderungen erfüllen, kann die Auswahl zum Beispiel zufällig erfolgen oder es wird beispielsweise der Netzknoten gewählt, der als erster gefunden wird. Die Auswahl von Netzknoten kann auch durch eine Liste bevorzugter Zuordnungen von Netzknoten zueinander unterstützt werden. Eine derartige Liste kann anhand der genannten Parameter sowie anhand einer, geographischen oder logischen, Distanz zwischen den Netzknoten erstellt werden. Eine logische Distanz ist durch die Anzahl der Übertragungseinrichtungen oder durch Verzögerungszeiten zwischen den Endpunkten definiert. Grundsätzlich sind möglichst geringe Distanzen erwünscht, da diese einen geringeren Aufwand erfordern. Die Distanzen zwischen Netzknoten können aus geographischen oder netztopologischen Angaben berechnet werden.

Bestimmte Protokolle auf Netzebenen wie das OSPF (Open Shortest Path First) Protokoll beinhalten Informationen über logische Distanzen und können diese zur Verfügung stellen.

Eine Auswahlvorrichtung kann, beispielsweise wenn eine Anforderung von einem weiteren Kommunikationsnetz eingeht, eine Auswahl zwischen verschiedenen Zugangsnetzen treffen. Wird beispielsweise eine 2 MBit Datenverbindung verlangt, wird die Auswahlvorrichtung ein drahtloses lokales Netz (wireless local area network) als Zugangsnetz zum Erreichen eines Teilnehmers wählen.

In Figur 1 wird eine Ausführungsform der Erfindung dargestellt, bei der eine Speichereinheit zur Speicherung bevorzugter Zuordnungen in dem Knotenkapazitätsspeicher KKD1 umgesetzt ist.

Eine Auswahlvorrichtung muß nicht notwendigerweise als eine zentrale Einrichtung in einem Netz realisiert werden. Je nach Netzgegebenheiten kann es sinnvoll sein, einzelne Elemente der Auswahlvorrichtung an verschiedenen Stellen im Netz zu plazieren. Eine weitere sinnvolle Ausführung der Erfindung ist, die Auswahlvorrichtung im Ganzen oder Teile mit gleichem Inhalt oder gleicher Funktion an mehreren Stellen im Netz zu realisieren. Eine Möglichkeit ist die Bildung von Domänen innerhalb des Netzes, die von jeweils einer Auswahlvorrichtung versorgt werden. Eine Auswahlvorrichtung, die eine derartige Domäne versorgt, kann sich bei der Speicherung von Informationen auf die Informationen beschränken, die zu Netzknoten der Domäne gehören beziehungsweise zu Gebieten gehören, die von Netzknoten der Domäne versorgt werden. Die in den Domänen gespeicherten Daten können auch von einer zentralen Auswahlvorrichtung aktualisiert werden.

Eine Auswahlvorrichtung kann als alleinstehende, gegenständliche Einrichtung, als sogenanntes "stand alone device" realisiert werden, oder gemeinsam mit anderen Netzknoten. Beispiele gemeinsamer Realisierungen sind die Anordnung zusammen mit einer Heimatdatei, einem Zugangsnetzknoten oder einem Kernnetzdiensteknoten.

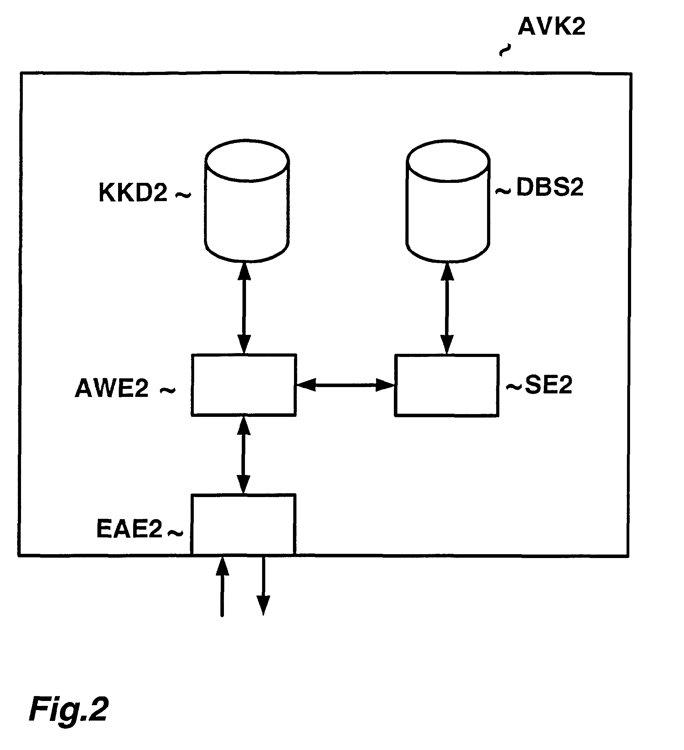

Figur 2 stellt eine Auswahlvorrichtung AVK2 dar, die zusätzlich zu der in Figur 1 dargestellten Elementen einen Versorgungsinformationsspeicher DBS2 und eine Selektionseinheit SE2 enthält. Der Versorgungsinformationsspeicher DBS2 enthält Versorgungsinformationen. Diese Informationen werden von der Selektionseinheit SE2 durchsucht, gegebenenfalls gefiltert und über die Ein/ausgabeeinheit EAE2 an einen ausgewählten Netzknoten übertragen.

Die Selektionseinheit SE2 erhält von der Bearbeitungseinheit AWE2 zumindest eine Identifikation des anfordernden Netzknotens. Anhand dieser Identifikation ermittelt die Selektionseinheit in dem Versorgungsinformationsspeicher DBS2 enthaltene Informationen. Die Selektionseinheit SE2 erhält weitere Informationen beispielsweise Informationen über die Hardware und die Software des ausgewählten Netzknotens oder zu unterstützender Standards. Anhand dieser Informationen filtert die Selektionseinheit SE2 die Versorgungsinformationen, die sie dem Kernnetzdiensteknoten über die Ein/Ausgabeeinheit EAE2 übermittelt. Diese Filterung erfolgt, da unterschiedliche Kernnetzdiensteknoten unterschiedliche Versorgungsinformationen benötigen beziehungsweise verarbeiten können. Bei einer alternativen Ausführungsform der Erfindung, erfolgt die Filterung der Versorgungsinformationen erst im empfangenden Netzknoten.

Figur 3 stellt einen erfindungsgemäßen Netzknoten KDK3 als ein Beispiel eines erfindungsgemäßen Netzknotens dar. Der Netzknoten KDK3 enthält eine Aktualisierungseinheit AAE3, eine Speichereinheit ZSE3 und eine Zustandsanalyseeinheit ZAE3. Die Zustandsanalyseeinheit ZAE3 analysiert innere Zustände des Kernnetzdiensteknoten KDK3 wie beispielsweise Auslastung, Anzahl der Verbindungen einer Verbindungsart, Anzahl der Verbindungen, die entsprechend eines bestimmten Standards aufgesetzt wurden, Anzahl der Verbindungen für einen bestimmten Telekommunikationsdienst wie Faksimile, Telefonie, Datenübertragung oder beliebige Kombinationen aus den vorgenannten.

Die Informationen können zum einen dazu verwendet werden, um zu bestimmen inwieweit einzelne Resourcen, die von einem Kernnetzdiensteknoten verwaltet werden, ausgelastet sind. Zum anderen kann ein Netzbetreiber beispielsweise Dienste, Protokolle, Zugangsnetze oder Übertragungsverfahren bevorzugen, indem er Schwellwerte in dem Netzknoten KDK3 einstellt, die von der Aktualisierungseinheit AAE3 ausgewertet werden. So kann er durch das Setzen niedriger Schwellwerte für Dienste, die nur gering vergütet werden, Dienste mit höherer Vergütung bevorzugen. Diese Schwellwerte werden in der Aktualisierungseinheit AAE3 gespeichert.

Die Aktualisierungseinheit AAE3 wertet die von der Zustandsanalyseeinheit ZAE3 ermittelten Daten aus und vergleicht sie mit gespeicherten Schwellwerten. Diese Auswertung kann sinnvollerweise in Abhängigkeit von den in einem Knotenkapazitätsspeicher KKD1 oder KKD2, oder einer Auswahlvorrichtung AVK1 oder AVK2 gespeicherten Parametern erfolgen. Das Ergebnis der Auswertung wird anschließend mit dem Ergebnis der vorherigen Auswertung verglichen. Das Ergebnis der vorherigen Auswertung ist in der Speichereinheit ZSE3 gespeichert. Stellt die Aktualisierungseinheit AAE3 fest, daß zwischen dem gespeicherten und dem aktuellen Ergebnis eine Diskrepanz besteht, aktualisiert sie die Parameter durch Senden einer Nachricht an die Auswahlvorrichtung. Dieser Abgleich kann auch für einzelne Parameter erfolgen. Falls ein Parameterwert für leitungsvermittelte Verbindungen "freie Kapazitäten" ist, meldet die Aktualisierungseinheit AAE3 den Netzknoten KDK3 in der Auswahlvorrichtung ab, sobald der Auslastungsschwellwert für diese Verbindungsart überschritten ist. Um eine Vielzahl von Aktualisierungen zu vermeiden ist es zweckmäßig, eine gewisse Hysterese zwischen Schwellwerten für eine Meßgröße einzuplanen. So kann der Schwellwert für das Setzen des Parameters "Kapazitäten" auf "freie Kapazitäten vorhanden" des Kernnetzdiensteknoten KDK3 in einer Auswahlvorrichtung AVK1 oder AVK2 bei einer Auslastung von 40% liegen, der Schwellwert für das Setzen des Parameters auf "keine Kapazitäten frei" des Netzknoten KDK3 jedoch bei 95% Auslastung. Denkbar ist auch die Angabe konkreter Werte wie 10% Auslastung anstelle der Angaben freie oder keine freien Kapazitäten. Durch Quantisierung der konkreten Werte läßt sich die Zahl der Aktualisierungen begrenzen. Meldet sich ein Netzknoten in seiner Gesamtheit bei der Auswahlvorrichtung an, beispielsweise nach einem Defekt oder weil er erstmalig in dem Netz auftritt, sendet er vorzugsweise Informationen zu allen Parametern, die in der Auswahlvorrichtung gespeichert werden. Ein Abrechnungsknoten (cost control server) wird sich beispielsweise unter anderem mit den Protokollen anmelden, die er unterstützt, wie RADIUS, CAP, DIAMETER und ähnlichen. Ein Positionierungsknoten (positioning server) wird beispielsweise die Genauigkeit, mit der er eine Position eines Nutzerendgerätes bestimmen kann, angeben.

In einer alternativen Ausführungsform der Erfindung, wird der Parameter "freie Kapazitäten" implizit aktualisiert, indem ein Netzknoten ohne freie Kapazitäten nicht in der Bearbeitungseinheit gespeichert wird und erst wieder eingetragen wird, wenn er sich mit freien Kapazitäten erneut anmeldet.

Das Verfahren der selbständigen Anmeldung oder Aktualisierung eines Netzknotens ermöglicht, neue oder wiederhergestellte Netzknoten durch Anmeldung bei der Auswahlvorrichtung in das Netz zu integrieren.

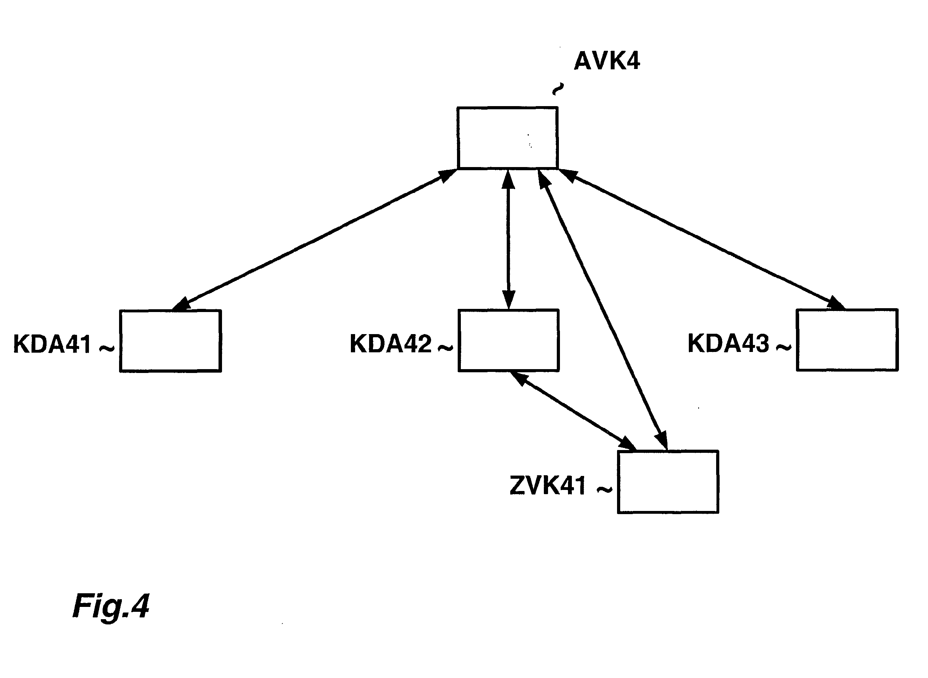

Figur 4 zeigt ein Kernnetz mit drei Kernnetzdiensteknoten KDA41, KDA42 und KDA43, einer Auswahlvorrichtung AVK4 sowie einen Zugangsnetzknoten ZVK41. Ein solcher Zugangsnetzknoten kann beispielsweise eine Basisstationssteuerungseinrichtung oder eine Funknetzsteuerungseinrichtung sein. Der Zugangsnetzknoten ZVK41 fordert einen Kernnetzdiensteknoten nach folgendem Verfahren an. In einem ersten Schritt erkennt der Zugangsnetzknoten ZVK41, daß er, beispielsweise für einen Verbindungsaufbau, mit einem Kernnetzdiensteknoten zusammenarbeiten muß. Er ermittelt die Anforderungen an den Kernnetzdiensteknoten und sendet eine Netzknotenanforderung an die Auswahlvorrichung AVK4. Eine Netzknotenanforderung kann beispielsweise eine Standortaktualisierungsanforderung (location updating request) oder eine Teilnehmeranmeldung (attachment) sein. Die Auswahlvorrichtung AVK4 wählt einen Kernnetzdiensteknoten KDA42 aus und sendet eine Identifikation des ausgewählten Kernnetzdiensteknoten KDA42 an den Zugangsnetzknoten ZVK41. Der Zugangsnetzknoten ZVK41 empfängt die Identifikation und fährt mit der jeweiligen Prozedur fort, die den Kernnetzdiensteknoten KDA42 erforderlich machte, beispielsweise einer Standortaktualisierung, einem Anrufaufbau oder einer Teilnehmeranmeldung. Die Netzknotenidentifikation kann eine Adresse des ausgewählten Kernnetzdiensteknotens KDA42 sein. Alternativ zu dem dargestellten Ablauf, kann der Zugangsnetzknoten ZVK41 erst einen bevorzugten Kernnetzdiensteknoten KDA41 kontaktieren. Ist dieser Kontakt erfolgreich, daß heißt kann die beabsichtigte Zusammenarbeit stattfinden, sendet er keine Nachricht an die Auswahlvorrichtung AVK4 sondern fährt direkt mit der jeweiligen Prozedur fort, die einen Kernnetzdiensteknoten erforderlich machte. Ist die Kontaktierung nicht erfolgreich, beispielsweise weil der kontaktierte Kernnetzdiensteknoten keine freien Kapazitäten hat oder defekt ist, verfährt der Zugangsnetzknoten ZVK41 weiter wie zuvor beschrieben, indem er eine Nachricht an die Auswahlvorrichtung AVK4 sendet.

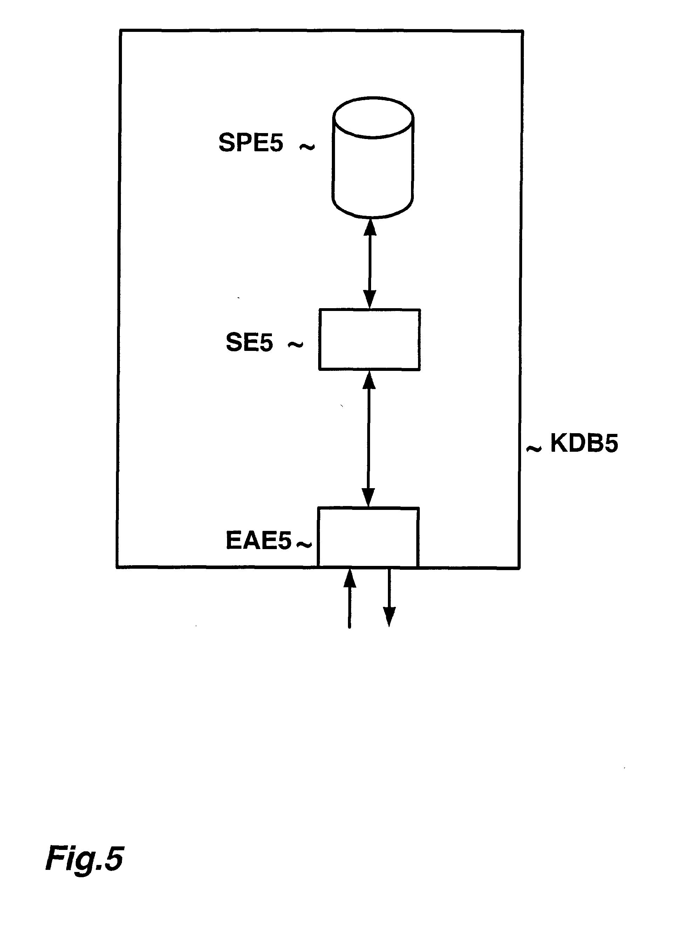

Figur 5 zeigt eine Konfigurationsdatenbank KDB5, mit einer Speichereinheit SPE5, einer Selektionseinheit SE5 und einer Ein/Ausgabeeinheit EAE5.
In der Speichereinheit werden Versorgungsinformationen von Netzknoten gespeichert. Die Selektionseinheit SE5 filtert Versorgungsinformationen eines Netzknotens, um sie an die Erfordernisse des Empfängers der Daten anzupassen. So kann ein Empfänger beispielsweise die Daten in einem bestimmten Format benötigen oder nur ausgewählte Informationen verarbeiten.
Die Ein/Ausgabeeinheit EAE5 empfängt Anfragen zu Netzknoten und sendet die gefilterten Daten an den jeweiligen Empfänger.

Eine bevorzugte Alternative ist, die Daten nicht in einzelnen Netzknoten zu speichern sondern sie zentral in der Konfigurationsdatenbank KDB5 zu speichern und zu verwalten. Dies vermindert den Administrationsaufwand und ermöglicht eine höhere Datenkonsistenz bei geringerem Verwaltungsaufwand.

Eine Konfigurationsdatenbank kann als zentrale Datenbank ebenso eingerichtet werden, wie als verteiltes System oder als ein repliziertes System. Eine Konfigurationsdatenbank muß nicht notwendigerweise als eine zentrale Einrichtung in einem Netz realisiert werden. Je nach Netzgegebenheiten kann es sinnvoll sein, einzelne Elemente der Konfigurationsdatenbank an verschiedenen Stellen im Netz zu plazieren. Eine weitere zweckmäßige Ausführung der Erfindung ist, die Konfigurationsdatenbank im Ganzen oder Teile mit gleichem Inhalt oder gleicher Funktion an mehreren Stellen im Netz zu realisieren. Eine Möglichkeit ist die Bildung von Domänen innerhalb des Netzes die von jeweils einer Konfigurationsdatenbank versorgt werden. Eine Konfigurationsdatenbank, die eine derartige Domäne versorgt, kann sich bei der Speicherung von Versorgungsinformationen auf die Informationen beschränken, die zu Netzknoten, Versorgungsbereichen oder Dienstebereichen innerhalb der Domäne gehören. Die in den Domänen gespeicherten Daten können auch von einer zentralen Konfigurationsdatenbank aktualisiert werden.

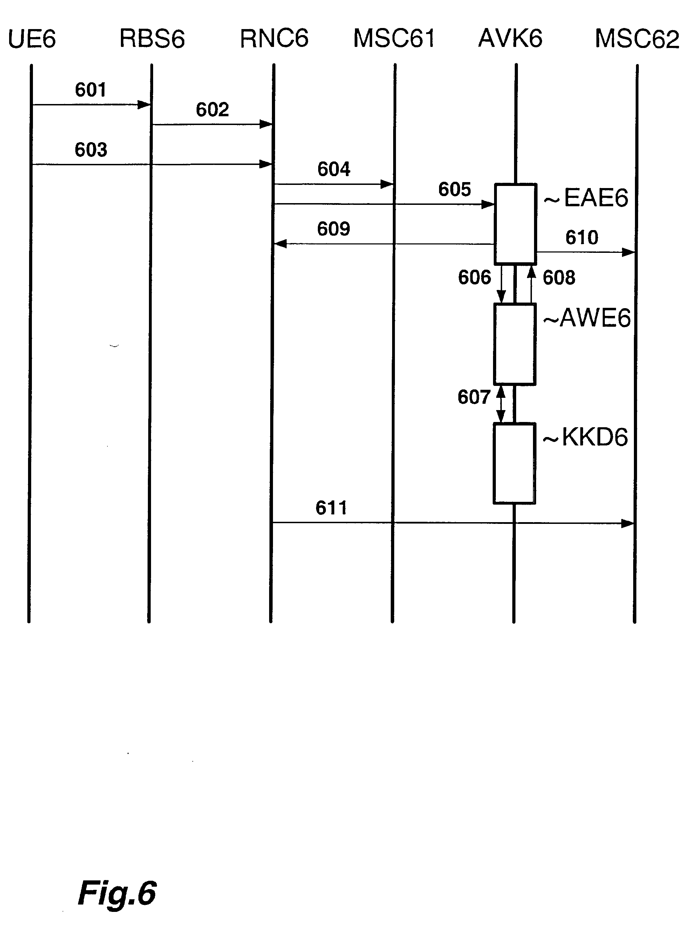

Im folgenden wird die Erfindung anhand von Figur 6 näher erläutert.
Ein Nutzerendgerät UE6 meldet sich nach Inbetriebnahme erstmalig bei einem Zugangsnetzknoten RBS6 an. Ein solcher Zugangsnetzknoten kann beispielsweise eine Basisstationssteuerungseinrichtung, eine Funkbasisstation, eine Funknetzsteuerungseinrichtung oder ein Knoten eines WLAN (Wireless Local Area Network) sein. In dem Ausführungsbeispiel handelt es sich, ohne Beschränkung der Erfindung auf ein solches Netz, um ein UMTS Netz, bei dem die Netzknoten untereinander über IP (Internet Protocol) Verbindungen miteinander kommunizieren. Das Nutzerendgerät UE6 kontaktiert eine Funkbasisstation RBS6 in einem ersten Schritt 601. Die Funkbasisstation RBS6 wählt eine bevorzugte Funknetzsteuerungseinrichtung RNC6 aus einer gespeicherten Liste bevorzugter Netzknoten und kontaktiert diese in Schritt 602 erfolgreich. Eine Netzknotenanforderung an eine Auswahlvorrichtung wird somit für die Auswahl einer Funknetzsteuerungseinrichung hinfällig. Die Funkbasisstation RBS6 verbindet das Nutzerendgerät UE6 mit der Funknetzsteuerungseinrichtung RNC6.

In einem weiteren Schritt 603 sendet das Nutzerendgerät UE6 eine Erstanmeldung (attachment) an die Funknetzsteuerungseinrichtung RNC6. Da eine feste Zuordnung von Kernnetzdiensteknoten zu Zugangsnetzknoten nicht besteht, muß die Funknetzsteuerungseinrichtung RNC6 einen Kernnetzdiensteknoten für die Bearbeitung der Erstanmeldung ermitteln. In einer bevorzugten Ausführung enthält die Funknetzsteuerungseinrichtung RNC6 einen Speicher zur Speicherung einer Liste bevorzugter Netzknoten. Aus dieser Liste wählt die Funknetzsteuerungseinrichtung RNC6 einen bevorzugten Kernnetzdiensteknoten MSC61 und kontaktiert ihn in Schritt 604. Steht dieser Kernnetzdiensteknoten MSC61 nicht zur Verfügung, beispielsweise wegen eines Defektes oder Überlastung, kontaktiert die Funknetzsteuerungseinrichtung RNC6 in einem nächsten Schritt 605 eine Auswahlvorrichtung AVK6 durch Senden einer Netzknotenanforderung. Die Ein/Ausgabeeinheit EAE6 der Auswahlvorrichtung AVK6 leitet die Netzknotenanforderung an die Bearbeitungseinheit AWE6 in einem weiteren Schritt 606 weiter. Die Bearbeitungseinheit AWE6 erkennt aus der IP Adresse des Absenders die anfordernde Funknetzsteuerungseinrichtung RNC6. Des weiteren kann sie dem Inhalt der Netzknotenanforderung entnehmen, daß ein UMTS-fähiges Endgerät eine Erstanmeldung durchführt und sich für leitungsvermittelte und paketvermittelte Dienste anmeldet. Die Bearbeitungseinheit AWE6 durchsucht in einem nächsten Schritt 607 den Knotenkapazitätsspeicher KKD6 nach den Parametern "unterstützt UMTS Protokoll", "unterstützt Leitungsvermittlung" und "unterstützt Paketvermittlung". Die Ergebnisliste wird mit einer Liste von bevorzugten Kernnetzdiensteknoten verglichen. Es gibt keine Übereinstimmungen, da der defekte Kernnetzdiensteknoten nicht als Netzknoten mit freien Kapazitäten eingetragen ist. Ein defekter Kernnetzdiensteknoten ist beispielsweise daran erkennbar, daß der übliche Signalisierungsverkehr nicht mehr mit oder über diesen Knoten abgewickelt werden kann. Ein als defekt erkannter Netzknoten und wird aus dem Speicher entfernt oder erhält einen entsprechenden Eintrag.

Da es keinen bevorzugten Kernnetzdiensteknoten gibt, berechnet die Bearbeitungseinheit AWE6 der Auswahlvorrichtung AVK6 die Abstände der einzelnen Kernnetzdiensteknoten zu der Funknetzsteuerungseinrichtung RNC6. Die Berechnung kann zum Beispiel auf Basis von Ortskoordinaten erfolgen, die als ein Parameter der Netzknoten gespeichert sind. Alternativ können bereits vorgespeicherte Entfernungen verwendet werden, oder Netzknoten sind einzelnen Sektoren des Netzes zugewiesen. Von den Kernnetzdiensteknoten, die nach der Prüfung der Parameter als mögliche Knoten gefunden wurden, wird der Kernnetzdiensteknoten MSC62, der sich in der geringsten Entfernung zu der anfordernden Funknetzsteuerungseinrichtung RNC6 befindet, von der Bearbeitungseinheit AVK6 ausgewählt.

Falls die Knoten RNC6 und MSC62 nicht regelmäßig zusammenarbeiten, sind die Versorgungsinformationen für die Funknetzsteuerungseinrichtung RNC6 nicht in dem Kernnetzdiensteknoten MSC62 gespeichert. In einer bevorzugten Ausführungsform werden die Daten nicht in einzelnen Netzknoten gespeichert, sondern zentral in einer Konfigurationsdatenbank gespeichert und verwaltet.

Dies vermindert den Administrationsaufwand und ermöglicht eine höhere Datenkonsistenz bei geringerem Verwaltungsaufwand. In weiteren Schritten 608 und 609 übermittelt die Bearbeitungseinheit AWE6 die IP Adresse des ausgewählten Kernnetzdiensteknotens MSC62 über die Ein/Ausgabeeinheit EAE6 an die anfordernde Funknetzsteuerungseinrichtung RNC6. Die Bearbeitungseinheit AWE6 filtert die vorhandenen Versorgungsinformationen, in diesem Fall Daten der Funknetzsteuerungseinrichtung RNC6 und Informationen über ihren Dienstebereich und ihren Versorgungsbereich. Die Filterung erfolgt entsprechend der Soft- und Hardware des Kernnetzdiensteknotens MSC62. Anschließend sendet die Auswahlvorrichtung AWE6 in einem weiteren Schritt 610 die gefilterten Daten an den Kernnetzdiensteknoten MSC62. In einer bevorzugten Ausführungsform erfolgt die Filterung erst in dem empfangenden Netzknoten MSC62. In einem weiteren Schritt 611 setzt sich die Funknetzsteuerungseinrichtung RNC6 mit dem Kernnetzdiensteknoten MSC62 in Verbindung. Die nachfolgende Erstanmeldungsprozedur erfolgt wie aus dem Stand der Technik bekannt.

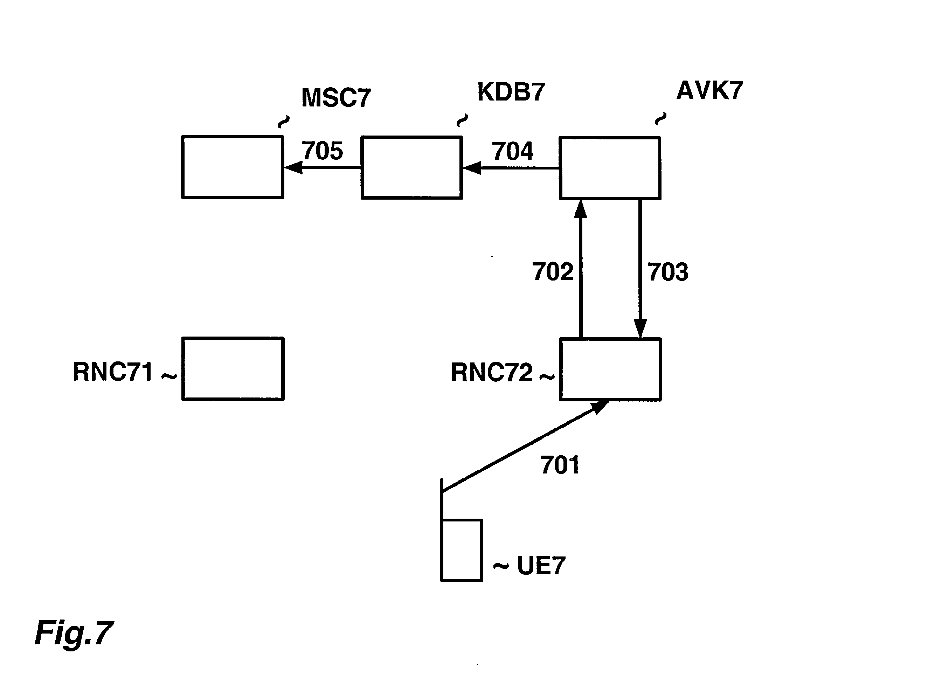

Anhand Figur 7 wird eine Standortaktualisierungsanforderung beschrieben. Nach dem erfolgreichen Abschluß einer Erstanmeldung eines Endgerätes UE7, wechselt dies Endgerät UE7 aus dem Versorgungsbereich einer ersten Funknetzsteuerungseinrichtung RNC71 in den Versorgungsbereich einer anderen Funknetzsteuerungseinrichtung RNC72. Die dynamischen Verbindungen zwischen Netzknoten ermöglichen es in diesem Fall, den bereits gewählten Kernnetzdiensteknoten MSC7 beizubehalten auch wenn dieser üblicherweise nicht mit der neuen Funknetzsteuerungseinrichtung RNC72 zusammenarbeitet.

In einem ersten Schritt 701 sendet das Nutzerendgerät UE7 eine Standortaktualisierungsanforderung an die aktuell versorgende Funknetzsteuerungseinrichtung RNC72. Diese Standortaktualisierungsanforderung enthält zumindest eine Identifizierung des Kernnetzdiensteknotens MSC7, der bisher mit dem Nutzerendgerät UE7 zusammenarbeitet. Diese Information liegt in Nutzerendgeräten vor. Alternativ zur Übermittlung der Identifizierung kann der Kernnetzdiensteknoten MSC7 auch durch eine Anfrage der Auswahlvorrichtung AVK7 bei einer Heimatdatei (home location register) erfragt werden. Eine weitere Möglichkeit ist die Speicherung des versorgenden Kernnetzdiensteknotens als Parameter in der Auswahlvorrichtung.

Die aktuelle Funknetzsteuerungseinrichtung RNC72 sendet in einem weiteren Schritt 702 eine Netzknotenanforderung an die Auswahlvorrichtung AVK7 und übermittelt dabei die Identifizierung des bisherigen Kernnetzdiensteknotens MSC7.

Die Auswahlvorrichtung AVK7 wählt, unter Berücksichtigung der Anforderungen und des bisherigen Kernnetzdiensteknotens MSC7, einen Netzknoten aus. Anschließend übermittelt sie, in einem weiteren Schritt 703, eine Identifikation des gewählten Netzknotens an die aktuelle Funknetzsteuerungseinrichtung RNC72. In dem Beispiel wird der bisherige Kernnetzdiensteknoten MSC7 beibehalten.

Wenn der Kernnetzdiensteknoten MSC7 nicht üblicherweise mit der aktuellen Funknetzsteuerungseinrichtung RNC72 zusammenarbeitet, sendet eine Auswahlvorrichtung AVK7 in einem weiteren Schritt 704 eine Nachricht an die Konfigurationsdatenbank KDB7. Die Nachricht enthält eine Identifikation der aktuellen Funknetzsteuerungseinrichtung RNC72, eine Identifikation des Kernnetzdiensteknotens MSC7 sowie Informationen über die Software und die Hardware des Kernnetzdiensteknotens. Die Ein/Ausgabeeinheit der Konfigurationsdatenbank KDB7 empfängt diese Nachricht und leitet sie an die Selektionseinheit weiter. Die Selektionseinheit lädt die Versorgungsinformationen der Funknetzsteuerungseinrichtung RNC72 aus der Speichereinheit und filtert sie entsprechend der Soft- und Hardware Versionen des Kernnetzdiensteknotens. In einem weiteren Schritt 705 übermittelt die Ein/Ausgabeeinheit die gefilterten Versorgungsinformationen an den Kernnetzdiensteknoten MSC7. Anschließend beginnt der Kernnetzdiensteknoten MSC7 in bekannter Art und Weise mit der Standortaktualisierung.

In einer bevorzugten Ausführungsform erfolgt die Filterung in dem empfangenden Kernnetzdiensteknoten. Wird ein einmal gewählter Kernnetzdiensteknoten beibehalten, entfallen sowohl die Anfrage bei der Auswahlvorrichtung sowie die Übermittlung einer Kernnetzdiensteknotenidentifikation. Stattdessen erfolgt eine Anfrage nach Versorgungsinformationen in der Konfigurationsdatenbank. Die Anfrage und deren Beantwortung erfolgen zwischen Kernnetzdiensteknoten und Konfigurationsdatenbank. Die dargestellten Schritte 701, 702, 703, 704 und 705 werden ebenfalls für eine Anrufübergabeanfrage (handover request) durchgeführt.

Die vorgestellten Verfahren lassen sich beispielsweise durch eine Steuerungssoftware in den Netzknoten implementieren. Insbesondere kann das Verfahren zur Auswahl eines Netzknotens ganz oder teilweise in einer oder mehreren Auswahlvorrichtungen sowie Konfigurationsdatenbanken als Software realisiert werden. Ebenso können die Verfahren zur Steuerung eines Netzknotens durch eine Software ausgeführt werden.

Die Erfindung ist nicht auf die dargestellten Beispiele beschränkt, sie kann in allen zellularen Kommunikationsnetzen eingesetzt werden. Die Kontaktierung der Auswahlvorrichtung oder der Konfigurationsdatenbank findet nicht nur bei der Erstanmeldung eines Endgerätes, bei einer Anrufübergabe oder bei der Standortaktualisierung statt. Sie kann zu beliebigen Zeitpunkten stattfinden.

## Patentansprüche

1. Auswahlvorrichtung (AVK1, AVK2) zur Auswahl von Netzknoten in einem zellularen Kommunikationsnetz, mit
- einem Knotenkapazitätsspeicher (KKD1, KKD2) zum Speichern von Parametern,
- einer Bearbeitungseinheit (AWE1, AWE2) zur Analyse von Netzknotenanforderungen und zum Auswählen eines Netzknotens anhand des Analyseergebnisses und der in dem Knotenkapazitätsspeicher gespeicherten Parameter,
- einer Ein/Ausgabeeinheit (EAE1, EAE2) zum Empfang von Netzknotenanforderungen und zum Ausgeben einer Netzknotenidentifikation des Netzknotens der einer Netzknotenanforderung zugewiesen wurde.

2. Auswahlvorrichtung nach Anspruch 1, bei der
einer der gespeicherten Parameter angibt, ob ein Netzknoten freie Kapazitäten besitzt.

3. Auswahlvorrichtung nach Anspruch 1 oder 2, in der
Einträge von Netzknoten, deren freie Kapazitäten einen Schwellwert unterschreiten, entfernt werden.

4. Auswahlvorrichtung nach Anspruch 1, 2 oder 3, bei der
die Bearbeitungseinheit bei der Auswahl Distanzen zwischen Netzknoten berücksichtigt.

5. Auswahlvorrichtung nach einem der Ansprüche 1 bis 4, die
bevorzugte Zuordnungen von Netzknoten zueinander speichert.

6. Auswahlvorrichtung nach einem der Ansprüche 1 bis 5, mit
- einem Versorgungsinformationsspeicher (DBS2) zum Speichern von Versorgungsinformationen,
- einer Selektionseinheit (SE2) zum Auswählen von Versorgungsinformationen für den zugewiesenen Netzknoten,
- einer Ein/Ausgabeeinheit (EAE2) die zusätzlich Versorgungsinformationen an den zugewiesenen Netzknoten oder eine ihm zugeordnete Besucherdatei sendet.

7. Netzknoten (KDK3),
mit einer Zustandsanalyseeinheit (ZAE3) die interne Zustände des Netzknotens ermittelt, einer Speichereinheit (ZSE3) die Auswertungen der internen Zustände speichert, einer Aktualisierungseinheit (AAE3) die interne Zustände des Netzknotens auswertet, mit gespeicherten Auswertungen vergleicht und eine Nachricht zur Aktualisierung von Parametern des Netzknotens, in Abhängigkeit von dem Vergleichsergebnis, an eine Auswahlvorrichtung sendet.

8. Netzknotens nach Anspruch 7, mit
einer Speichereinheit zur Speicherung von Versorgungsinformationen.

9. Konfigurationsdatenbank (KDB5), mit
einer Speichereinheit (SPE5) zur Speicherung von Versorgungsinformationen, einer Selektionseinheit (SE5) zum Auswählen von Versorgungsinformationen für einen Netzknoten und einer Ein/Ausgabeeinheit (EAE5) zum Empfang von Versorgungsinformationsanforderungen und zur Übersendung von Versorgungsinformationen an den Netzknoten oder eine ihm zugeordnete Besucherdatei.

10. Verfahren zur Auswahl eines Netzknotens in einem zellularen Kommunikationsnetz mit folgenden Schritten:
- Empfang einer Netzknotenanforderung,
- Analyse der Netzknotenanforderung,
- Auswahl eines Netzknotens durch Vergleich des Analyseergebnisses mit gepeicherten Parametern von mindestens einem Netzknoten,
- Senden einer Identifikation des ausgewählten Netzknotens an den Sender der Netzknotenanforderung.

11. Verfahren nach Anspruch 10 mit den zusätzlichen Schritten:
- Auswahl von Versorgungsinformationen für den ausgewählten Netzknoten und
- Senden von Versorgungsinformationen an den ausgewählten Netzknoten

12. Verfahren nach Anspruch 10 mit dem zusätzlichen Schritt:
- Senden einer Versorgungsinformationsanforderung an eine Konfigurationsdatenbank, wobei die Versorgungsinformationsanforderung eine Identifikation des Empfängers der Versorgungsinformationen und eine Identifikation des Gebietes und der Einrichtung, deren Versorgungsinformationen geschickt werden, umfaßt.

13. Verfahren zur Steuerung eines Netzknotens, mit folgenden Schritten:
- Erkennen der Notwendigkeit mit einem weiteren Netzknoten zusammenzuarbeiten,
- Ermittlung von Anforderungen an den weiteren Netzknoten,
- Senden der Anforderungen in einer Netzknotenanforderung an eine Auswahlvorrichtung,
- Empfang einer Identifikation des weiteren Netzknotens und
- Kontaktierung des weiteren Netzknotens.

14. Verfahren zur Steuerung eines Netzknotens nach Anspruch 13, bei dem vor dem Senden einer Netzknotenanforderung folgende Schritte durchgeführt werden:
- Kontaktieren mindestens eines bevorzugten, voreingestellten Netzknotens,
- Prüfen ob die Kontaktierung erfolgreich war,
- Entscheiden in Abhängigkeit des Prüfungsergebnisses ob die Zusammenarbeit mit dem kontaktierten Netzknoten erfolgt oder ob eine Netzknotenanforderung gesendet wird.

15. Verfahren zur Steuerung eines Netzknotens nach Anspruch 14, bei dem der bevorzugt kontaktierte Netzknoten aus einer Liste ausgewählt wird.

16. Software, gespeichert auf einem computerlesbaren Medium oder in einem Arbeitsspeicher eines Computers, zur Ausführung eines Verfahren nach einem der Ansprüche 10 bis 15.
